# EUROPEAN PATENT SPECIFICATION

(11) **EP 3 703 180 B1**
(45) Date of publication and mention of the grant of the patent: **13.12.2023**
(21) Application number: 19191211.2
(22) Date of filing: 12.08.2019
(51) Int. Cl.: H01M 10/48, F16L 3/10, H02G 3/04, H02G 3/32, H01M 50/204

(54) **WIRE-BUNDLE RECEIVING BRACKET AND BATTERY MODULE**
KABELBAUMHALTER UND BATTERIEMODUL
SUPPORT DE FAISCEAU DE CÂBLAGE ET MODULE DE BATTERIE

(30) Priority: 26.02.2019 CN 201920240599 U
(43) Date of publication of application: 02.09.2020
(73) Proprietor: Contemporary Amperex Technology Co., Limited, Ningde, Fujian 352100 (CN)
(72) Inventor: CHEN, Yuchao, Ningde City, Fuijan Province 352100 (CN)
(74) Representative: Gong, Jinping

(56) References cited:
- EP-A1- 2 706 593
- JP-B2- 6 220 547
- US-A1- 2012 145 838
- US-A1- 2012 228 001
- US-A1- 2012 328 920
- US-A1- 2013 161 068

## Description

### TECHNICAL FIELD

The present disclosure relates to the technical field of energy storage devices, and in particular, to a battery module.

### BACKGROUND

A battery module includes a plurality of batteries. In order to acquire data about such as voltage and temperature of each battery, a sampling wire-bundle is provided in the battery module. Since there is a large number of sampling wire-bundles are provided in the battery module and a potential difference between the wire-bundles is relatively great, the improper installation and fixation of the wire-bundle may cause abnormal abrasion of an insulation layer of the wire-bundle, and further cause electric leakage and short circuit, which may further result in more electrical failures or even a fire on the battery module. In such a case, the personal safety and property safety are in danger.

At present, the wire-bundle is installed and fixed mainly in two ways. The first way is strapping, which is inconvenient to operate and may result in a lower productivity of the battery module. The second way is snap-in, which may easily cause a detachment of the wire-bundle from a wire slot due to the presence of an opening in the wire slot and thus reduces the reliability of the battery module. JP6220547B2 discloses a bus bar module, including a resin plate for holding conductors, a wire routing path integrally formed with the plate for housing voltage detection lines, and a terminal housing part. US2012328920A1 teaches a battery module including connecting members and a flexible flat cable. In US2013161068A1, a cable clamp includes a board and a cover. US2012228001A1 discloses that the cable management apparatus includes a securing board and a cable management element. EP2706593A1 discloses that a battery wiring module 10 is to be attached to an electric cell group (13) constituted by an array of a plurality of electric cells (12) each having positive and negative electrode terminals (11), and includes a bus bar (20) to be connected to the electrode terminals (11), a detection wire (33) for detecting a state of the electric cell group (13), a resin protector (40) for holding the bus bar (20), a lid portion (61) that covers the bus bar (20) and is made of an insulating material, and at least one wall portion (64) disposed on a face of the lid portion (61) opposite to the bus bar (20) in a direction intersecting the lid portion (61), the at least wall portion (64) forming a routing space (S) in which the detection wire (33) is routed. US2012/145838A1 discloses that a cable management apparatus includes a securing board and a cable management clip. A clipping portion and a securing portion are located on the securing board. The cable management clip includes a mounting base and a pressing clip pivotally attached to the mounting base. A cable may be locked between the mounting base and the pressing clip. Elastic arms extend from the mounting base, the elastic arms deform to allow the fitment and removal of the cable management clip from the securing board.

### SUMMARY

The present disclosure provides a battery module to facilitate installing and receiving the wire-bundle, thereby improving reliability of receiving the wire-bundle.

The present invention relates to a battery module, comprising: a wire-bundle; and a wire-bundle receiving bracket for receiving the wire-bundle. The wire-bundle receiving bracket comprises: a wire-bundle receiving slot comprising: a first side wall, a second side wall opposite to the first side wall, and a bottom wall connecting the first side wall and the second side wall; and a clasp part comprising a cover plate for covering the wire-bundle receiving slot, and a curved portion and a buckling portion that are disposed at two ends of the cover plate. The curved portion is connected to the first side wall, and the buckling portion is buckled on the second side wall, the buckling portion comprises an extending section and a first buckling section; the extending section extends in a direction facing towards an inner side of the cover plate, and the first buckling section is disposed at an end of the extending section facing away from the cover plate; and a second buckling section for matching the first buckling section is provided on the second side wall. Both the first buckling section and the second buckling section are protrusions. One protrusion is provided at an inner side of the cover plate, and one groove is provided in a middle portion of the protrusion; a dimension of the groove is configured in such a manner that the wire bundle is tightly pressed and fixed by the groove; and the groove extends along a length direction of the wire-bundle receiving slot and extends over a whole length of the protrusion.

In an embodiment according to the present disclosure, the curved portion has an elastic arcuate structure.

In an embodiment according to the present disclosure, the curved portion has a smaller thickness than the cover plate.

In an embodiment according to the present disclosure, an avoiding slot is formed between an inner side of the curved portion and the cover plate.

In an embodiment, the wire-bundle receiving slot and the clasp part are formed into one piece by injection molding.

In an embodiment according to the present disclosure, the battery module further includes a baffle. The baffle includes a first end fixedly connected to the first side wall or the second side wall, and a second end provided with a mounting notch.

The technical solutions provided by the present disclosure can achieve the following beneficial effects.

The battery module provided by the present disclosure includes a wire-bundle receiving slot and a clasp part. The wire-bundle receiving slot is provided with an opening for facilitating installation of the wire-bundle. The opening of the wire-bundle receiving slot is covered by clasp part, so that the wire-bundle is received in the wire-bundle receiving slot. The operation is convenient, and the wire-bundle is reliably received. An end of the clasp part is provided with a curved portion, and the curved portion is connected to the first side wall of the wire-bundle receiving slot, so that the clasp part can flip to open and close the opening of the receiving slot. Another end of the clasp part is provided with a buckling portion, and the buckling portion is buckled on the second side wall of the wire-bundle receiving slot to closes the opening of the wire-bundle receiving slot by the clasp part during use, thereby prevent the wire-bundle from detaching from the wire-bundle receiving slot.

### BRIEF DESCRIPTION OF DRAWINGS

FIG. 1 is a structural schematic diagram of a battery module according to an embodiment of the present disclosure;
FIG. 2 is a top view of the battery module shown in FIG. 1;
FIG. 3 is a structural schematic diagram of a wire-bundle receiving bracket according to an embodiment of the present disclosure;
FIG. 4 is a partially enlarged view of the wire-bundle receiving bracket shown in FIG. 3;
FIG. 5 is a structural cross-sectional view of a clasp part in a closed state according to an embodiment of the present disclosure; and
FIG. 6 is a structural cross-sectional view of a clasp part in an open state according to an embodiment of the present disclosure;

### Reference signs:

1 case;
2 supporting plate;
   20 connection sheet;
3 wire-bundle receiving bracket;
   30 wire-bundle receiving slot;
      300 first side wall;
      302 second side wall;
         302a second buckling section;
      304 bottom wall;
   32 clasp part;
      320 cover plate;
      322 curved portion;
         322a avoiding slot;
      324 buckling portion;
         324a extending section;
         324b first buckling section;
      326 protrusion;
         326a groove;
         326b locking foot;
   34 baffle;
      340 first end;
      342 second end;
      344 mounting notch;
4 wire-bundle.

The drawings herein are incorporated into and constitute a part of the present specification, illustrate embodiments of the present disclosure and explain principles of the present disclosure together with the specification.

### DESCRIPTION OF EMBODIMENTS

In the description of the present disclosure, the terms "first" and "second" are used merely for a purpose of description, which shall not to be construed as indicating or implying relative importance, unless otherwise stated or indicated. The term "plurality" means two or more, unless otherwise stated or indicated. The terms "connect", "fix" and the like shall be construed in a broad sense. For example, "connection" may be fixed connection, detachable connection, integral connection, or electrical connection, and the "connection" may be either direct connection or indirect connection via an intermediate element. For those skilled in the art, the specific meanings of the above terms in the present disclosure can be understood according to specific situations.

It should be understood that in the description of the present disclosure, the terms such as "upper", "lower" and the like are used to indicate positions shown in the drawing, instead of being construed as limitations of the embodiment of the present disclosure. In addition, when an element is described as being "above" or "under" another element in the context, it should be understood that the element can be directly or via an intermediate element located "above" or "under" another element.

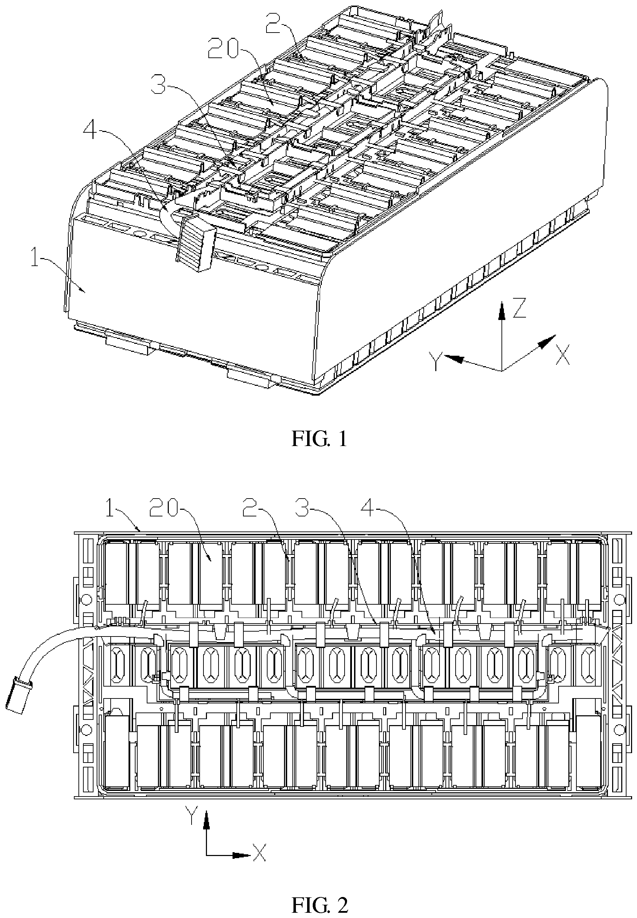

As shown in FIG. 1 and FIG. 2, an embodiment of the present disclosure provides a battery module, including a case 1, a supporting plate 2 and a wire-bundle receiving bracket 3. The case 1 receives a plurality of batteries (not shown). The supporting plate 2 is disposed at top of the case 1, and the supporting plate 2 supports connection sheet 20. Adjacent batteries are connected to each other through the connection sheet 20, thereby connecting the plurality of batteries in series and/or in parallel. The wire-bundle receiving bracket 3 is connected to the supporting plate 2 for mounting and receiving the wire-bundle 4. Specifically, the wire-bundle receiving bracket 3 can be buckled on the supporting plate 2.

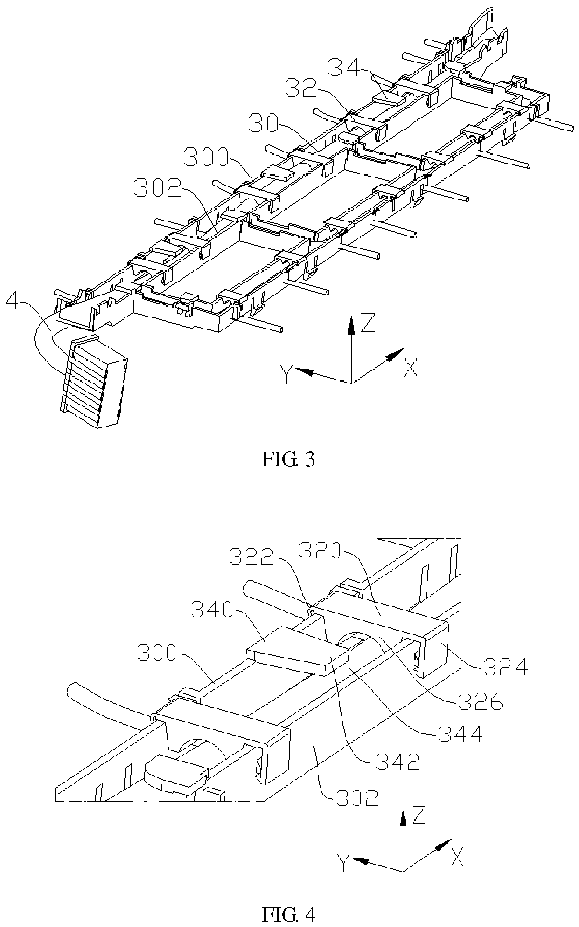

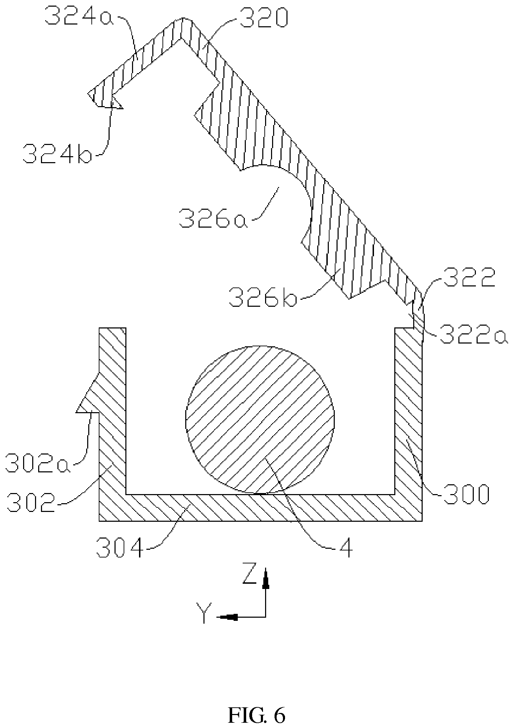

The embodiment shown in FIG. 3 to FIG. 6 provides a wire-bundle receiving bracket 3. The wire-bundle receiving bracket 3 includes a wire-bundle receiving slot 30 and a clasp part 32, and the wire-bundle 4 is received in the wire-bundle receiving slot 30 by the clasp part 32. The clasp part 32 closes an opening of the wire-bundle receiving slot 30 when the clasp part 32 is in a closed state, and the clasp part 32 opens the opening of the wire-bundle receiving slot 30 when the clasp part 32 is in an open state. The wire-bundle 4 can be installed easily and received securely. With a proper matching between the clasp part 32 and the wire-bundle 4, the wire-bundle 4 can be fixed in the wire-bundle receiving slot 30. The wire-bundle receiving slot 30 includes a first side wall 300 and a second side wall 302 opposite to the first side wall 300. The first side wall 300 and the second side wall 302 are connected at bottom through a bottom wall 304.The opening of the wire-bundle receiving slot 30 is provided at top for facilitating installation of the wire-bundle 4. The clasp part 32 is configured to cover the opening of the wire-bundle receiving slot 30, so as to secure the wire-bundle 4 in the wire-bundle receiving slot 30. In this way, the wire-bundle 4 is prevented from detaching from the wire-bundle receiving slot 30. According to the invention, the clasp part 32 includes a cover plate 320, as well as a curved portion 322 and a buckling portion 324 that are respectively disposed at two ends of the cover plate 320. The curved portion 322 is connected to the first side wall 300, so that the clasp part 32 can flip through the curved portion 322 to open or close the opening of the wire-bundle receiving slot 30 (an area of the opening corresponding to the clasp part 32). The buckling portion 324 is buckled on the second side wall 302, such that the opening of the wire-bundle receiving slot 30 can be closed by the clasp part 32 during use, preventing the detachment of the wire-bundle 4. For example, the wire-bundle receiving bracket 3 can include a plurality of clasp parts 32 sequentially arranged along a length direction of the wire-bundle receiving slot 30, i.e., a direction X shown in FIG. 1 and FIG. 2, in order to provide multiple fixing points for the wire-bundle 4 and further improve the fixation reliability of the wire-bundle 4. For example, two adjacent clasp parts 32 are spaced apart from each other with a distance, and the distance between adjacent clasp parts 32 can be determined according to softness and movable space of the wire-bundle 4. Two adjacent clasp parts 32 can fix a segment of the wire-bundle 4, thereby reducing the number of required clasp parts 32 and reducing operation complexity.

In an embodiment according to the present disclosure, the wire-bundle receiving slot 30 and the clasp part 32 are made of a same material, and the wire-bundle receiving slot 30 and the clasp part 32 are formed into one piece by injection molding, which is simple and can produce reliably connection.

The curved portion 322 can be any structure allowing the clasp part 32 to flip, such as a hinge structure or a bendable structure having elasticity.

In an embodiment according to the present disclosure, when the clasp part 32 is in the closed state, the curved portion 322 is an elastic arcuate structure. When the clasp part 32 opens the opening of the wire-bundle receiving slot 30 by flipping, the curved portion 322 is stretched into a linear structure or an approximately linear structure. When the clasp part 32 closes the opening of the wire-bundle receiving slot 30 by flipping, the curved portion 322 is deformed by bending and forms a rebound force. Under the effect of the rebound force, the clasp part 32 is tightly connected to the wire-bundle receiving slot 30 through the buckling portion 324, thereby preventing a vibration of the clasp part 32 from affecting the fixation reliability of the wire-bundle 4.

Further, the curved portion 322 is a smaller thickness than the cover plate 320, and thus the curved portion 322 and the cover plate 320 have different elasticity. In other words, the curved portion 322 has a smaller thickness and a greater elasticity, and thus is likely to be bent and deformed to flip the clasp part 32; and the cover plate 320 has a greater thickness and a lower elasticity, which inhibits the bending and deformation, such that the clasp part 32 is capable of closing the opening of the wire-bundle receiving slot 30.

For example, when the thickness of the curved portion 322 is smaller than the thickness of the cover plate 320, an avoiding slot 322a is formed between an inner side of the curved portion 322 and the cover plate 320. On the one hand, the avoiding slot 322a is located at the inner side the curved portion 322, and thus an outer portion of the wire-bundle receiving bracket 3 maintains flat when the clasp part 32 is in the closed state, such that sharp portions, which may scratch the operator or other components, are not formed; on the other hand, since the inner side of the curved portion 322 is not completely fitted during bending, a gap is formed between the cover plate 320 and the top of the wire-bundle receiving slot 30, with the avoiding slot 322a, the cover plate 320 can protrude from the inner side of the curved portion 322, thereby reducing the gap between the cover plate 320 and the top of the wire-bundle receiving slot 30, reducing the movable space of the clasp part 32, and increasing the fixation reliability of the wire-bundle 4.

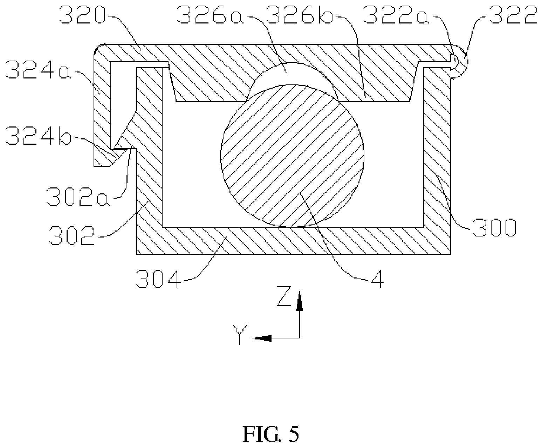

Further, the inner side of the cover plate 320 (a side of the cover plate 320 facing towards the wire-bundle receiving slot 30, i.e., an opposite direction to direction Z shown in FIG. 5) is provided with a protrusion 326 to press against the wire-bundle 4, so as to prevent the movement of the wire-bundle 4 in the wire-bundle receiving slot 30, which can cause breakage of the wire-bundle 4 and electric leakage. For example, a slot width of the wire-bundle receiving slot 30, i.e., a distance between an inner side of the first side wall 300 and an inner side of the second side wall 302, is larger than an outer diameter of the wire-bundle 4; and a slot depth of the wire-bundle receiving slot 30, i.e., a distance between the top of the wire-bundle receiving slot 30 and a bottom 304 of the wire-bundle receiving slot 30, is larger than the outer diameter of the wire-bundle 4, so that the wire-bundle receiving slot 30 can be easily installed into the wire-bundle receiving slot 30. For example, both the slot width and the slot depth are larger than the outer diameter by 1 to 3mm. When the difference between the slot width (or slot depth) and the outer diameter is smaller than 1mm, it is difficult to perform assembling; and when the difference is larger than 3mm, the wire-bundle receiving slot 30 occupies a relatively large space. When the clasp part 32 is in the closed state, the distance between the protrusion 326 and the bottom wall 304 should be smaller than the outer diameter of the wire-bundle 4, so as to apply a pressing force between the protrusion 326 and the wire-bundle 4.

In an embodiment according to the present disclosure, one or more protrusions 326 can be provided along a width direction of the wire-bundle receiving slot 30. When more than one protrusions 326 are provided, each protrusion 326 has a height gradually increasing along a direction from the middle portion to both ends of the cover plate 320, thereby maintaining each protrusion 326 in contact with the wire-bundle 4.

In an embodiment according to the present disclosure, a side of the protrusion 326 facing away from the cover plate 320 can have either a planar surface or a concave surface. The concave surface is preferable, which increases a contact area between the protrusion 326 and the wire-bundle 4, thereby increasing the fixation reliability of the wire-bundle 4. The side of the protrusion 326 may be provided with a slip-proof notch for preventing the wire-bundle 4 from slipping.

According to the invention, only one protrusion 326 is provided along the width direction of the wire-bundle receiving slot 30, and the middle portion of the protrusion 326 is provided with a groove 326a. The groove 326a extends over the length of the wire-bundle receiving slot 30 (along the direction X shown in the figures) and passes through the protrusion 326. The presence of the groove 326a produces two locking feet 326b that are separated on the protrusion 326. The two locking feet 326b fix the wire-bundle 4 respectively at two sides of the wire-bundle 4. In this way, the wire-bundle 4 is prevented from moving laterally and detaching from the protrusion 326, and the contact area between the protrusion 326 and the wire-bundle 4 is also increased, thereby enhancing the fixation reliability.

The groove 326a can have a cross-section of any shape such as an arcuate cross-section, a polyline cross-section, etc., and in the present embodiment, merely the arcuate cross-section is described in details as an example. For example, an inner diameter of the groove 326a is not larger than the outer diameter of the wire-bundle 4, so that the protrusion 326 can tightly press against the wire-bundle 4 with the locking feet 326b. It should be understood that the inner diameter of the groove 326a can also be larger than the outer diameter of the wire-bundle 4, in which the protrusion 326 tightly presses against the wire-bundle 4 through the bottom of the groove 326a.

Further, the above-mentioned buckling portion 324 includes an extending section 324a and a first buckling section 324b, and the second side wall 302 is provided with a second buckling section 302a. The first buckling section 324b matches and is buckled on the second buckling section 302a. The extending section 324a extends in a direction facing towards the inner side of the cover plate 320 (the side of the cover plate 320 facing towards the wire-bundle receiving slot 30, i.e., the opposite direction of the direction Z shown in FIG. 5). The first buckling section 324b is arranged at an inner side of an end of the extending section 324a facing away from the cover plate 320, thereby enlarging a covering area of the clasp part 32 on the wire-bundle receiving slot 30, and thus increasing the connection reliability.

The first buckling section 324b and the second buckling section 302a can be any structures that match each other, such as engaged protrusion and groove, or two connected protrusions According to the invention, the first buckling section 324b and the second buckling section 302a are two protrusions that are connected to each other, so as to avoid a groove structure in the buckling portion 324 or in the second side wall 302 that may weaken their strength.

When the first buckling section 324b and the second buckling section 302a are protrusions, a side of the first buckling section 324b facing towards the cover plate 320 is in contact with a side of the second buckling section facing away from the cover plate 320. The side of the first buckling section 324b facing away from the cover plate 320 and/or the side of the second buckling section 302a facing towards the cover plate 320 can be provided with a buckling guidance surface, for example, an oblique surface or an arcuate surface, in order to facilitate the buckling between the first buckling section 324b and the second buckling section 302a and reduce the force required for buckling the clasp part 32.

In an embodiment according to the present disclosure, a length of the extending section 324a is approximately a half of the slot depth of the wire-bundle receiving slot 30. In this way, the fixation thereof is reliable and difficult to loose. When the length of the extending section 324a is larger than the half of the slot depth of the wire-bundle receiving slot 30, the extending section 324a has a relatively great elasticity and thus is likely to be detached. When the length of the extending section 324a is smaller than the half of the slot depth of the wire-bundle receiving slot 30, the extending section 324a has a relatively low elasticity and thus a brittle fracture of the extending section 324a may occur during the buckling.

Further, the wire-bundle receiving bracket provided by the present disclosure further includes a baffle 34. The baffle 34 has two opposite ends, i.e., a first end 340 and a second end 342. The first end 340 is fixed to the first side wall 300 or the second side wall 302, and the second end 342 is provided with a mounting notch 344. The wire-bundle 4 can be installed into the wire-bundle receiving slot 30 through the mounting notch 344, and the baffle 34 can pre-fix the wire-bundle 4, thereby preventing the wire-bundle 4 from detaching from the wire-bundle receiving slot 30 during the buckling process of the clasp part 32.

In an embodiment according to the present disclosure, the baffle 34 can be disposed between two adjacent clasp parts 32, so as to prolong the possible distance between adjacent clasp parts 32, and thus further reducing the number of the clasp parts 32.

## Claims

1. A battery module, comprising:
a wire-bundle (4); and
a wire-bundle receiving bracket (3) for receiving the wire-bundle (4),
wherein the wire-bundle receiving bracket (3) comprises:
a wire-bundle receiving slot (30) comprising: a first side wall (300), a second side wall (302) opposite to the first side wall (300), and a bottom wall (304) connecting the first side wall (300) and the second side wall (302); and
a clasp part (32) comprising a cover plate (320) for covering the wire-bundle receiving slot (30), and a curved portion (322) and a buckling portion (324) that are disposed at two ends of the cover plate (320), wherein the curved portion (322) is connected to the first side wall (300), and the buckling portion (324) is buckled on the second side wall (302),
the buckling portion (324) comprises an extending section (324a) and a first buckling section (324b); the extending section (324a) extends in a direction facing towards an inner side of the cover plate (320), and the first buckling section (324b) is disposed at an end of the extending section (324a) facing away from the cover plate (320); and a second buckling section (302a) for matching the first buckling section (324b) is provided on the second side wall (302); wherein both the first buckling section (324b) and the second buckling section (302a) are protrusions,
one protrusion (326) is provided at an inner side of the cover plate (320), and one groove (326a) is provided in a middle portion of the protrusion (326); a dimension of the groove (326a) is configured in such a manner that the wire bundle (4) is tightly pressed and fixed by the groove (326a); and the groove (326a) extends along a length direction of the wire-bundle receiving slot (30) and extends over a whole length of the protrusion (326).

2. The battery module according to claim 1, **characterized in that** the curved portion (322) comprises an elastic arcuate structure.

3. The battery module according to claim 1, **characterized in that** the curved portion (322) comprises a smaller thickness than the cover plate (320).

4. The battery module according to claim 3, **characterized in that** an avoiding slot is formed between an inner side of the curved portion (322) and the cover plate (320).

5. The battery module according to claim 1, **characterized in that** the wire-bundle receiving slot (30) and the clasp part (32) are in one piece.

6. The battery module according to claim 1, further comprising a baffle (34), wherein the baffle (34) comprises a first end (340) fixedly connected to the first side wall (300) or the second side wall (302), and a second end (342) provided with a mounting notch (344).

## Patentansprüche

1. Batteriemodul, umfassend:
ein Drahtbündel (4) und
eine Drahtbündelaufnahmehalterung (3) zur Aufnahme des Drahtbündels (4),
wobei die Drahtbündelaufnahmehalterung (3) Folgendes umfasst:
einen Drahtbündelaufnahmeschlitz (30), der Folgendes umfasst: eine erste Seitenwand (300), eine zweite Seitenwand (302) gegenüber der ersten Seitenwand (300) und eine Bodenwand (304), die die erste Seitenwand (300) mit der zweiten Seitenwand (302) verbindet, und
einen Klammerteil (32), der eine Abdeckplatte (320) zum Abdecken des Drahtbündelaufnahmeschlitzes (30) und einen gekrümmten Abschnitt (322) und einen Spangenabschnitt (324), die an zwei Enden der Abdeckplatte (320) angeordnet sind, wobei der gekrümmte Abschnitt (322) mit der ersten Seitenwand (300) verbunden ist und der Spangenabschnitt (324) ab die zweite Seitenwand (302) geschnallt ist,
wobei der Spangenabschnitt (324) eine Erstreckungssektion (324a) und eine erste Spangensektion (324b) umfasst, wobei sich die Erstreckungssektion (324a) in eine zu einer Innenseite der Abdeckplatte (320) weisende Richtung erstreckt und die erste Spangensektion (324b) an einem von der Abdeckplatte (320) weg weisenden Ende der Erstreckungssektion (324a) angeordnet ist, und wobei eine zweite Spangensektion (302a) zum Zusammenpassen mit der ersten Spangensektion (324b) an der zweiten Seitenwand (302) vorgesehen ist, wobei sowohl die erste Spangensektion (324b) als auch die zweite Spangensektion (302a) Vorsprünge sind,
wobei ein Vorsprung (326) an einer Innenseite der Abdeckplatte (320) vorgesehen ist und eine Nut (326a) in einem mittleren Abschnitt des Vorsprungs (326) vorgesehen ist, wobei eine Abmessung der Nut (326a) so ausgestaltet ist, dass das Drahtbündel (4) von der Nut (326a) eng zusammengedrückt und festgelegt wird, und wobei sich die Nut (326a) entlang einer Längenrichtung des Drahtbündelaufnahmeschlitzes (30) erstreckt und sich über eine Gesamtlänge des Vorsprungs (326) erstreckt.

2. Batteriemodul nach Anspruch 1, **dadurch gekennzeichnet, dass** der gekrümmte Abschnitt (322) eine elastische bogenförmige Struktur umfasst.

3. Batteriemodul nach Anspruch 1, **dadurch gekennzeichnet, dass** der gekrümmte Abschnitt (322) eine geringere Dicke als die Abdeckplatte (320) umfasst.

4. Batteriemodul nach Anspruch 3, **dadurch gekennzeichnet, dass** zwischen einer Innenseite des gekrümmten Abschnitts (322) und der Abdeckplatte (320) ein Ausweichschlitz ausgebildet ist.

5. Batteriemodul nach Anspruch 1, **dadurch gekennzeichnet, dass** der Drahtbündelaufnahmeschlitz (30) und der Klammerteil (32) einteilig sind.

6. Batteriemodul nach Anspruch 1, ferner umfassend eine Blende (34), wobei die Blende (34) ein erstes Ende (340), das fest mit der ersten Seitenwand (300) oder der zweiten Seitenwand (302) verbunden ist, und ein zweites Ende (342), das mit einer Montagekerbe (344) versehen ist.

## Revendications

1. Module de batterie, comprenant :
un faisceau de fils (4) ; et
un support de réception de faisceau de fils (3) destiné à recevoir le faisceau de fils (4),
dans lequel le support de réception de faisceau de fils (3) comprend :
une fente de réception de faisceau de fils (30) comprenant : une première paroi latérale (300), une seconde paroi latérale (302) opposée à la première paroi latérale (300), et une paroi inférieure (304) reliant la première paroi latérale (300) et la seconde paroi latérale (302) ; et
une partie fermoir (32) comprenant une plaque couvercle (320) pour couvrir la fente de réception de faisceau de fils (30), et une portion courbée (322) et une portion de bouclage (324) qui sont disposées à deux extrémités de la plaque couvercle (320), dans lequel la portion courbée (322) est reliée à la première paroi latérale (300), et la portion de bouclage (324) est bouclée sur la seconde paroi latérale (302),
la portion de bouclage (324) comprend une section d'extension (324a) et une première section de bouclage (324b) ; la section d'extension (324a) s'étend dans une direction tournée vers un côté intérieur de la plaque couvercle (320), et la première section de bouclage (324b) est disposée à une extrémité de la section d'extension (324a) tournée à l'opposé de la plaque couvercle (320) ; et une seconde section de bouclage (302a) destinée à être assortie à la première section de bouclage (324b) est prévue sur la seconde paroi latérale (302) ; dans lequel la première section de bouclage (324b) et la seconde section de bouclage (302a) sont toutes les deux des saillies,
une saillie (326) est prévue sur un côté intérieur de la plaque couvercle (320), et une rainure (326a) est prévue dans une portion médiane de la saillie (326) ; une dimension de la rainure (326a) est configurée de manière telle que le faisceau de fils (4) soit pressée et fixé de façon serrée par la rainure (326a) ; et la rainure (326a) s'étend le long d'une direction de longueur de la fente de réception de faisceau de fils (30) et s'étend sur une longueur entière de la saillie (326).

2. Module de batterie selon la revendication 1, **caractérisé en ce que** la portion courbée (322) comprend une structure arquée élastique.

3. Module de batterie selon la revendication 1, **caractérisé en ce que** la portion courbée (322) comprend une épaisseur plus petite que la plaque couvercle (320).

4. Module de batterie selon la revendication 3, **caractérisé en ce qu'**une fente d'évitement est formée entre un côté intérieur de la portion courbée (322) et la plaque couvercle (320).

5. Module de batterie selon la revendication 1, **caractérisé en ce que** la fente de réception de faisceau de fils (30) et la partie fermoir (32) sont en une pièce.

6. Module de batterie selon la revendication 1, comprenant en outre un déflecteur (34), dans lequel le déflecteur (34) comprend une première extrémité (340) reliée de façon fixe à la première paroi latérale (300) ou la seconde paroi latérale (302), et une seconde extrémité (342) pourvue d'une entaille de montage (344).
